# EUROPÄISCHE PATENTANMELDUNG

(11) **EP 1 985 770 A2**
(43) Veröffentlichungstag der Anmeldung: **29.10.2008**
(21) Anmeldenummer: 08007166.5
(22) Anmeldetag: 11.04.2008
(51) Int. Cl.: E04B 1/41

(54) **Verfahren zur Herstellung einer Befestigung von Bauteilen an Beton**

(30) Priorität: 23.04.2007 DE 102007020320; 10.03.2008 DE 102008014806
(71) Anmelder: Storopack Hans Reichenecker GmbH, 72555 Metzingen (DE)
(72) Erfinder: Hauser, Jürgen, 88326 Aulendorf (DE); Pöge, Armin, 72138 Kirchentellinsfurt (DE)
(74) Vertreter: Dreiss, Fuhlendorf, Steimle & Becker

(57) **Zusammenfassung**

verfahren zur Herstellung einer Befestigung von Bauteilen an Beton, so zum Beispiel auf Baustellen von Stützen an vorgefertigten Betonplatten, bei dem in den Beton ein schraubenlinienförmiger Drahtkörper eingesetzt wird und ein Innengewinde zur Aufnahme eines mit einem Außengewinde versehenen Befestigungselementes bildet, bei dem der schraubenlinienförmige Drahtkörper(3)von einem Haltestab (1) gehalten_wird, dass der Haltestab (1) nach dem Aushärten des Betons wieder entfernt und das Befestigungselement (9) eingeschraubt wird.

## Beschreibung

Die Erfindung betrifft ein Verfahren zur Herstellung einer Befestigung von Bauteilen an Beton, so zum Beispiel auf Baustellen von Stützen an vorgefertigten Betonplatten, bei dem in den Beton ein schraubenlinienförmiger Drahtkörper eingesetzt wird, der ein Innengewinde zur Aufnahme eines mit einem Außengewinde versehenen Befestigungselementes bildet.

Aus der DE 78235 ist ein derartiges Verfahren bekannt. Mit einem Bohrer wird ein Loch in eine Wand gebohrt. In das Loch wird ein schraubenlinienförmiger Drahtkörper eingesetzt und in diesem mit Gips, Zement oder dergleichen befestigt. Dieser Drahtkörper bildet dann die "Mutter" für eine Schraube, die in den Drahtkörper eingespannt wird. Der Draht, aus dem der Drahtkörper gewickelt ist, wird über den das Gewinde bildenden Teil nochmals zurückgewunden, um zwischen den Windungen Zwischenräume zu bilden, damit der Gips, Zement oder dergleichen besser anhaftet. Nachteilig an dieser Ausbildung ist zum einen die komplizierte Form des Drahtkörpers als Doppelspirale und zum anderen die Tatsache, dass dadurch nicht verhindert werden kann, dass flüssiger Beton in den Raum innerhalb des Drahtkörpers eindringt und dort hart wird, so dass dieser vor dem Einschrauben der Schraube oder eines anderen Befestigungselements erst wieder gesäubert werden muss. Dies ist umständlich.

Das Eindringen von Beton in den Innenraum des durch einen gewundenen Drahtkörper gebildeten Gewindes, das zur Befestigung einer Schraube dient, soll bei der US 1,145,462 dadurch verhindert werden, dass die Windungen, einschließlich des Endes, so eng aneinander gewickelt werden, dass der Innenraum dadurch geschlossen ist und somit kein Beton eintreten kann. Der Drahtkörper ist über einer Schraube zu wickeln. Auch hier erscheint es sehr schwierig, den Drahtkörper so zu fertigen, dass er einen gegen das Eindringen von Beton geschlossenen Körper bildet.

Bei der DE 201 11 550 U1 wird der Innenraum eines schraubenlinienförmig gewickelten Drahtkörpers, der zum Einschrauben einer Spannschraube dient, durch einen über diesen gezogenen Schrumpfschlauch gegen das Eindringen von Beton gesichert. Dabei wird der Drahtkörper durch einen Nagelstopfen an der Schalung gehalten. Diese Anordnung ist ebenfalls sehr umständlich. Sie hat ferner den Nachteil, dass der Schrumpfschlauch durch den Beton zusammengedrückt oder beschädigt werden kann. Ein weiterer Nachteil sind die geringen Auszugswerte (Kraft, die zum Herausziehen der Schraube erforderlich ist). Der Beton kann nicht ausreichend zwischen die Gewindegänge der Feder eindringen. Auch gibt es keine Verbindung zwischen Metall und Beton. Der Schrumpfschlauch wirkt wie eine Trennschicht.

Aus der DE 195 47 318 ist ein Dübel zum Einleiten von Zug- und/oder Druckkräften bekannt geworden, dessen Ankerstab dadurch mit einem Gewinde ausgestattet ist, dass ein eingesetzter Drahtkörper, dessen letzte Windungen zum freien Ende hin sich verjüngen, beim Einschrauben des Befestigungselementes durch die dabei aufgebrachte Kraft gespreizt wird. Dieser Kraftschluss hängt sehr von der präzisen Abstimmung der Maße des Befestigungselementes und des Drahtkörpers aufeinander ab und setzt auf dem Bau eine komplizierte und präzise Montage der einzelnen Teile voraus.

Der Erfindung liegt die Aufgabe zugrunde, ein Verfahren der eingangs genannten Art und dafür geeignete Mittel bereit zu stellen, die einfacher sind.

Diese Aufgabe wird dadurch gelöst, dass der schraubenlinienförmige Drahtkörper von einem Haltestab gehalten wird, dass der Haltestab nach dem Aushärten des Betons wieder entfernt und das Befestigungselement eingeschraubt wird.

Die Erfindung umfasst ferner vorteilhafte Weiterbildungen.

Dieses Verfahren bietet erhebliche Vorteile, nämlich:
- einfache, schnelle Handhabung,
- geringer Aufwand,
- grundsätzlich drei Möglichkeiten des Einsetzens des Haltestabs, nämlich durch Eindrücken in den noch flüssigen Beton, durch Befestigung an der Armierung des Betons oder durch nachträglichen Einbau (Bohren eines Loches und Verankerung in diesem),
- Verwendbarkeit genormter Spannstäbe,
- sicheres Verhindern, dass Beton in den Innenraum des Drahtkörpers fließen kann,
- Möglichkeit, die Betonfläche über dem oberen Ende des Haltestabes glatt zu ziehen.

Ausführungsbeispiele der Erfindung werden im Folgenden unter Bezugnahme auf die beigefügten Zeichnungen näher beschrieben. Es stellen dar:
- Figur 1: ein Haltestab in Seitenansicht,
- Figur 2: eine perspektivische Ansicht des Haltestabs nach Figur 1;
- Figur 3: einen Einsatzkörper, bestehend aus dem Haltestab nach Figur 1 und einem Drahtkörper,
- Figur 4: einen im Schnitt gezeichneten Betonkörper mit eingesetztem Einsatzkörper (mit Haltestab);
- Figur 5: den im Schnitt gezeichneten Betonkörper nach Entfernen des Haltestabs;
- Figur 6: die Befestigung eines Bauteils mit einem Spannstab in den nach Figur 5 gebildeten Hohlraum;
- Figur 7: ein zweites Ausführungsbeispiel;
- Figur 8: einen Montagebügel;
- Figur 9: den Montagebügel nach Figur 8 in Verbindung mit einem Einsatzkörper;
- Figur 10: einen vergrößerten Ausschnitt aus Figur 9;
- Figur 11: einen Montagebügel mit Einsatzkörper, befestigt an einer Armierung des Betons.

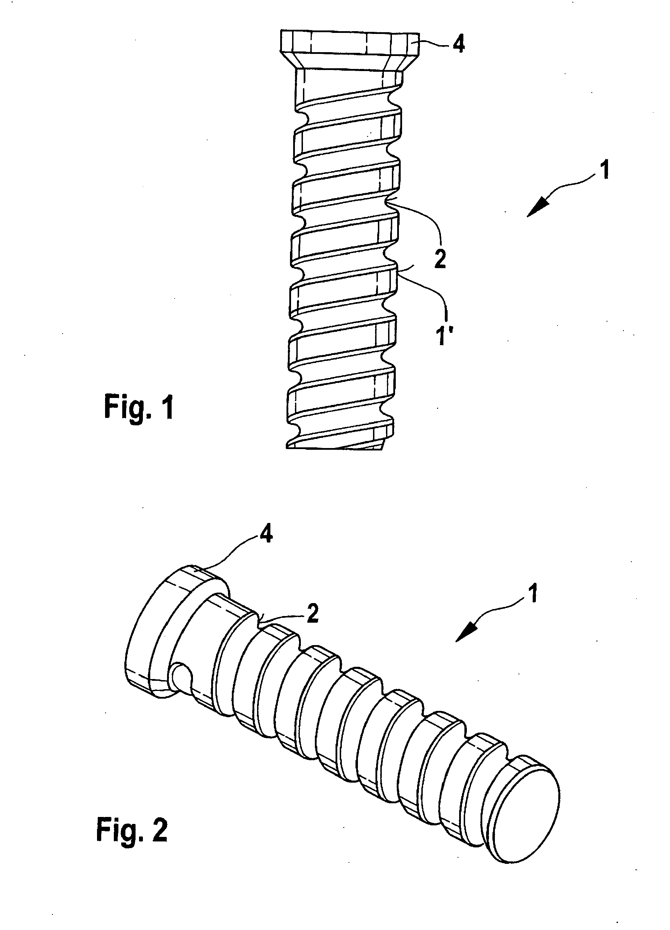

Die Figuren 1 und 2 zeigen einen im Wesentlichen zylindrischen Haltestab 1 aus aufgeschäumtem Kunststoff (zum Beispiel Styropor) mit einer Länge von ca. 110 und einem Durchmesser von ca. 20 mm. Er ist - ähnlich wie eine Schraube - mit einer schraubenlinienförmigen, im Querschnitt etwa halbkreisförmigen umlaufenden Nut 2 versehen.

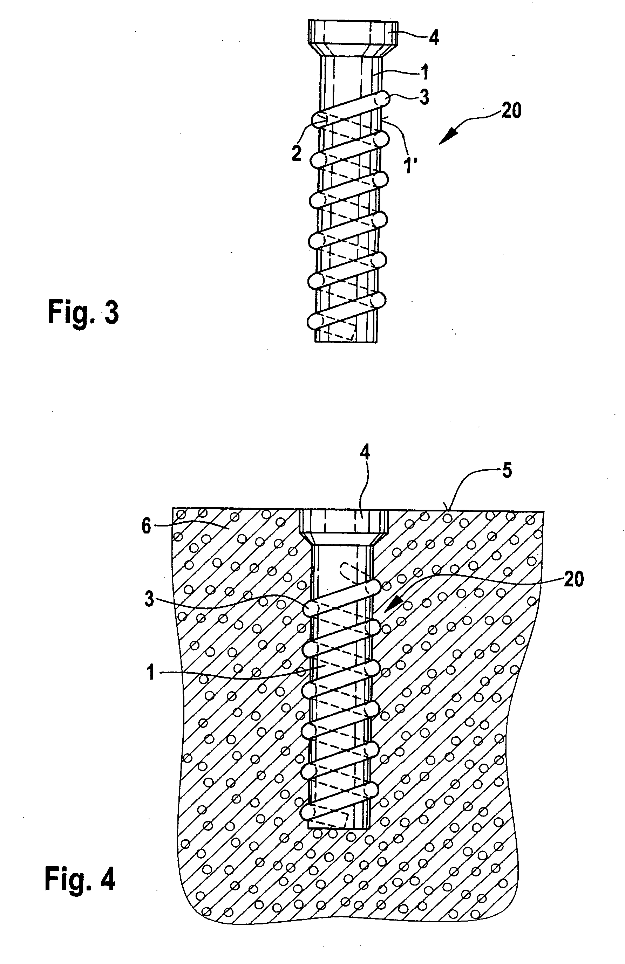

Wie in Figur 3 gezeigt, ist der Haltestab 1 auf seiner zylindrischen Außenseite von einem schraubenlinienförmigen Drahtkörper 3 umgeben, der in die Nut 2 passt. Der Drahtkörper 3 hat die Form einer Feder, wobei allerdings die Federeigenschaften im vorliegenden Zusammenhang nicht von Bedeutung sind. Der Draht, aus dem der Drahtkörper 3 gebogen ist, hat einen Durchmesser von ca. 2 - 5 mm, wobei die einzelnen Windungen voneinander einen Abstand von ca. 2 - 10 mm haben können. Der Drahtkörper 3 ist ca. 100 mm lang. Mit seinem halben Querschnitt steht der Draht über die zylindrische Außenfläche 1' des Haltestabs 1 hervor. Das obere Ende 4 des Haltestabs 1 dient zur Handhabung. Haltestab 1 und Drahtkörper 3 bilden einen Einsatzkörper 20. Man kann den Haltestab 1 separat - mit Nut 2 - aufschäumen, Haltestab und Drahtkörper separat fertigen und ausliefern, so dass der Anwender dann den Haltestab in den Drahtkörper eindreht, bevor er den Einsatzkörper in den Beton einsetzt oder an der Armierung befestigt. Man kann aber auch den Einsatzkörper 20 derart herstellen, dass man den Haltestab 1 in einer Form aufschäumt, in die der Drahtkörper 3 bereits eingelegt ist.

Der Einsatzkörper 20 wird beim Betonieren zum Beispiel einer Betonplatte an der Stelle, von der man weiß, dass danach im Zuge einer Montage ein anderes Bauteil befestigt werden soll, in den noch flüssigen Beton eingelegt, wie das in Figur 4 gezeigt ist. Das obere Ende 4 des Haltestabs 1 wird so weit in den Beton eingedrückt, dass es nachher bündig mit der oberen Begrenzungsfläche 5 des Betonkörpers 6 abschließt, so dass man nach dem Aushärten des Betons sehen kann, wo sich der Haltestab befindet.

Wenn der Beton mit eingesetztem Einsatzkörper 20 ausgehärtet ist, wird der aus aufgeschäumtem Kunststoff bestehende Haltestab 1 aus dem diesem Verbund entfernt. Sofern der Haltestab 1 mit dem Beton partiell verklebt ist und daher nicht einfach herausgedreht werden kann, wird er durch Ausbohren mit einem Bohrer, dessen Durchmesser etwas geringer als der lichte Innendurchmesser des Drahtkörpers 3 sein sollte, entfernt. Das kann leicht mit einem Akkuschrauber erfolgen. Dass dabei nicht alle Teile des aus Kunststoffschaum bestehenden Haltestabes 1 entfernt werden, sondern evtl. einige Krümel in dem entstehenden Hohlraum 7 zurückbleiben , ist für die weitere Verwendung nicht hinderlich.

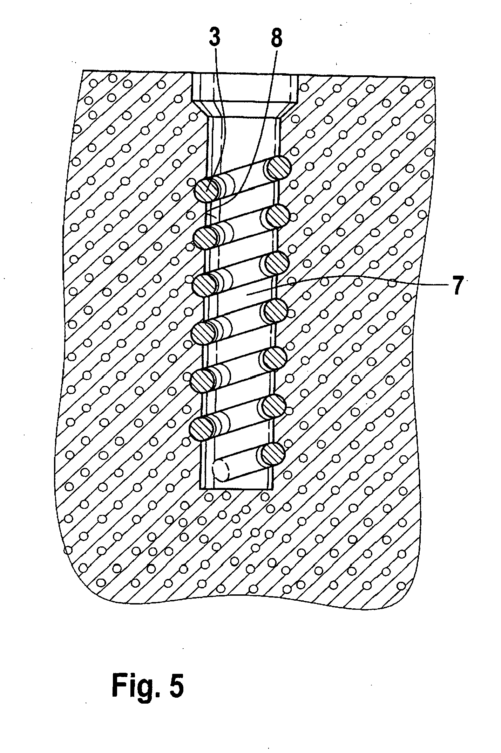

Der durch Entfernung des Haltestabs 1 entstandene Hohlraum 7 ist im Schnitt in Figur 5 dargestellt. Der Haltestab 1 hat also für den Einsatzkörper 20 die Funktion eines aus Styropor gebildeten nachträglich in einfacher Weise entfernbaren Kerns. Der nur mit einem Teil seines Querschnitts in die Außenwand integrierte Drahtkörper 3 hat nunmehr die Funktion eines Innengewindes. Auf diese Weise ist ein mit dem Innengewinde versehener Hohlraum 7 entstanden, in den ein mit einem passenden Außengewinde versehener - an sich bekannter - Spannstab 9 eingeschraubt werden kann, um ein Befestigungsmittel für ein weiteres Bauteil, zum Beispiel eine Schalung oder eine Stütze, zu bilden.

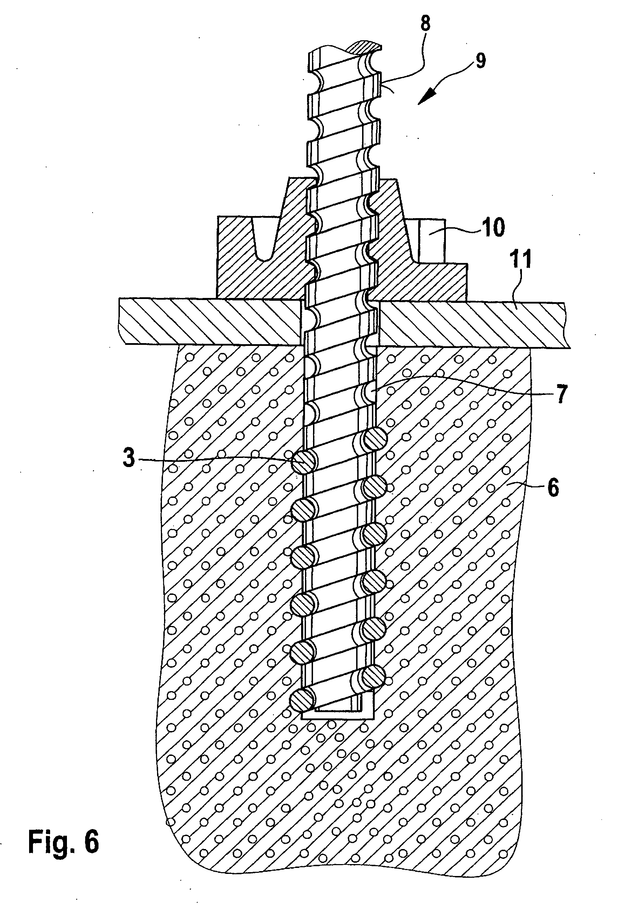

Eine derartige Befestigung unter Verwendung eines Spannstabs 9 ist in Figur 6 gezeigt. Der Spannstab 9, auch als "Anker" bezeichnet, ist eine Stahlstange mit einem umlaufenden, ein Außengewinde bildenden Wulst 8. Derartige Anker sind als Normteil verfügbar und werden auf dem Bau vielfältig verwendet. Dieser Spannstab 9 wird in das durch den Drahtkörper 3 gebildeten Innengewinde eingeschraubt und kann unter Verwendung einer Mutter 10 zum Beispiel zur Befestigung einer Platte 11 dienen.

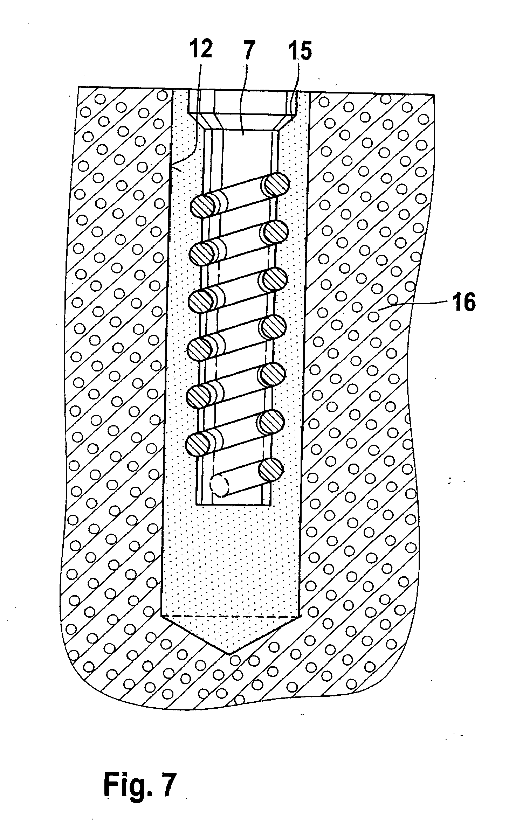

Figur 7 zeigt eine Alternative zur Herstellung des mit einem Innengewinde in Form eines integrierten Drahtkörpers 3 versehenen Hohlraums 7. Dabei wird in den bereits ausgehärteten Betonkörper 6 eine Bohrung 12 gebohrt, deren Durchmesser größer ist als der äußere Durchmesser des Einsatzkörpers 20. In die Bohrung 12 wird dann der Einsatzkörper 20 eingesetzt. Darauf wird der zwischen Einsatzkörper und Bohrung 20 bestehende Zwischenraum 15 mit einem schnell härtenden Ankerklebstoff ausgefüllt. Ein solcher Ankerklebstoff ist zum Beispiel unter der Bezeichnung "Sika Ancor Fix" oder "Sikadur" (siehe Prospekt der Firma Sika Deutschland GmbH, 72574 Bad Urach) im Handel erhältlich. Nach Aushärten des Ankerklebstoffs und Entfernen des Haltestabs 1 in der beschriebenen Weise entsteht dann wieder der Hohlraum 7, in den, wie bereits erläutert, zur Befestigung eines anderen Bauteils ein Spannstab 9 eingeschraubt werden kann.

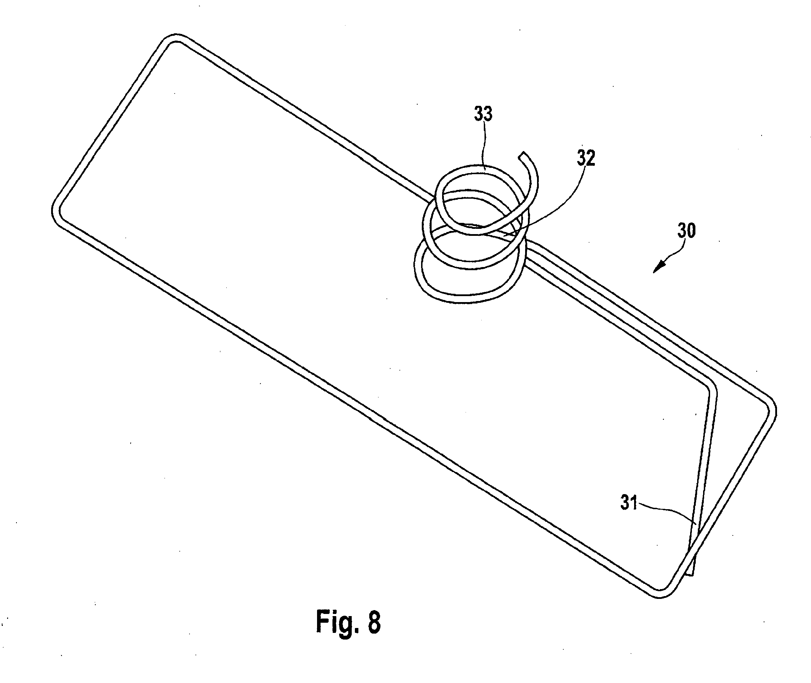

Figur 8 zeigt einen Montagebügel 30, der einteilig aus Draht gebogen ist. Ausgehend von seinem Ende 31 hat er die Form eines langgestreckten rechteckigen Rahmens, der an der Stelle 32 etwa in der Mitte einer Längsseite des Rahmens, in einen als Feder ausgebildeten Drahtkörper 33 übergeht, der - im Ausführungsbeispiel - ca. zweieinhalb Windungen umfasst. Durch die rahmenartige Ausbildung des Montagebügels kann dieser auf jede Unterlage aufgelegt werden. Der Drahtkörper 33 stellt dann für den Drahtkörper 3 eines Einsatzkörpers 20 (Figur 3) seinerseits ein Gewinde dar, in das der Einsatzkörper 20 eingedreht werden kann und sicher im Beton gehalten wird, etwa wenn der Montagebügel 30 auf einer horizontal angeordneten Schaltafel 50 aufliegt.

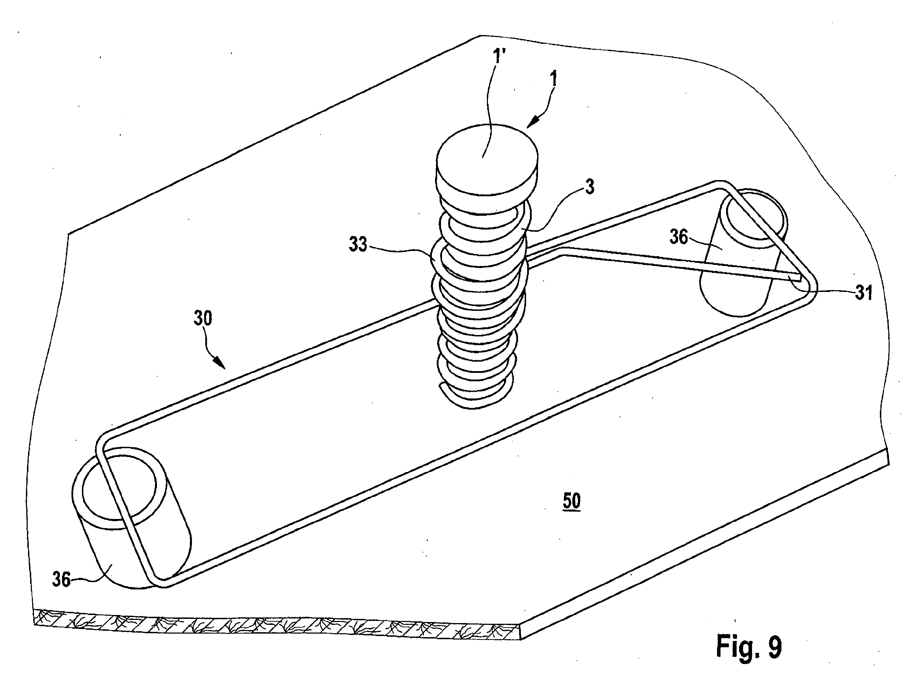

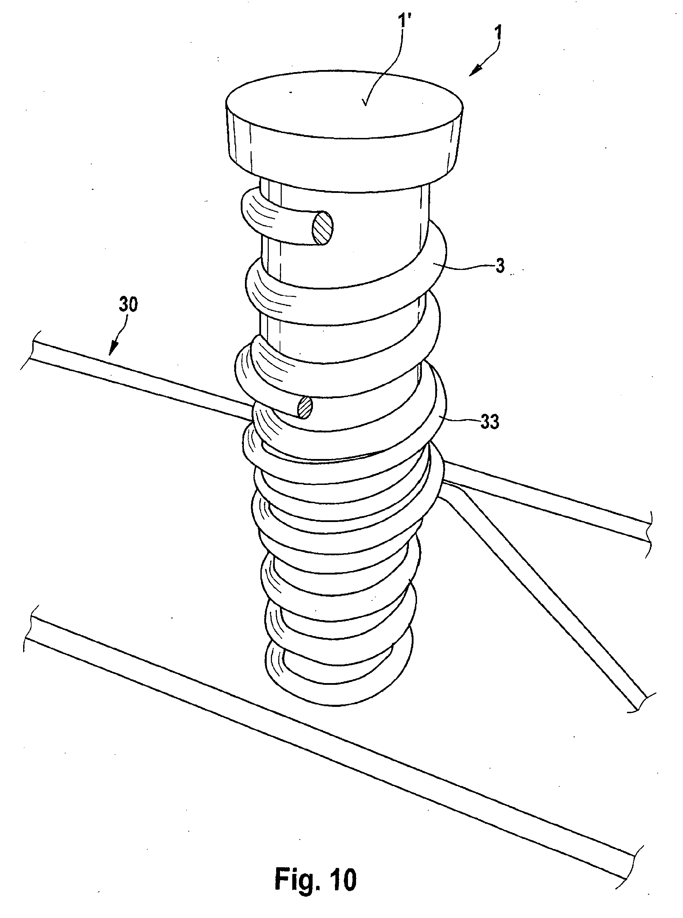

Eine solche Situation ist in den Figuren 9 und 10 dargestellt, wobei - zur Illustration - die beiden schmalen Seitenabschnitte des Montagebügels auf Zapfen 36 aufgesetzt sind. Damit wird verdeutlicht, dass ein solcher Montagebügel 30 nicht nur - wie nach Figur 8 - auf einer Fläche, also etwa einer horizontal liegenden Schaltafel 50, in der ein Betonteil gegossen wird, aufgelegt werden kann, sondern mit einfachen Hilfsmittel in einer gewissen Höhe über einer Schaltafel angeordnet werden kann.

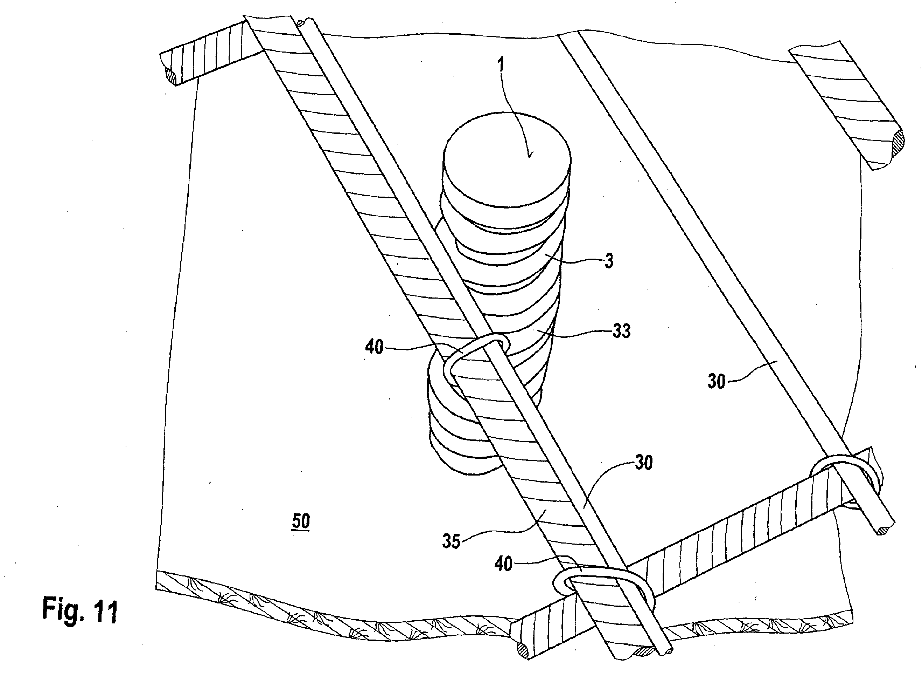

Aus Figur 11 ist ersichtlich, wie ein aus Montagebügel 30 und Einatzkörper 20 bestehendes Gebilde an einem Stab 35 einer Armierung für eine Platte aus Beton befestigt werden kann. Die Befestigung erfolgt mittels eines Drahtstückes 40, das um den Draht, der den Montagebügel 30 bildet, und den Stab 35 gewickelt wird. Da solche Armierungen ihrerseits durch geeignete Abstandhalter von der Grundfläche, die wiederum zum Beispiel durch eine Schaltafel gebildet werden kann, in einem bestimmten Abstand zu dieser gehalten werden, ist auch auf diese Weise eine sichere Lage des Einsatzkörpers 20 in der gewünschten Stellung gewährleistet.

Einsatzkörper 20 und Montagebügel 30 können auch umgekehrt auf eine Schalplatte eingesetzt werden, so dass die Oberfläche des Endes 4 des Haltestabes 1 des Einsatzkörpers 20 auf der Schaltafel 50 aufliegt und, wenn diese Fläche dann die Sichtfläche des zu erstellenden Betonteils bildet, direkt von dieser her zugänglich ist.

## Patentansprüche

1. Verfahren zur Herstellung einer Befestigung von Bauteilen an Beton, so zum Beispiel auf Baustellen von Stützen an vorgefertigten Betonplatten, bei dem in den Beton ein schraubenlinienförmiger Drahtkörper eingesetzt wird, der ein Innengewinde zur Aufnahme eines mit einem Außengewinde versehenen Befestigungselementes bildet, **dadurch gekennzeichnet, dass** der schraubenlinienförmige Drahtkörper(3)von einem Haltestab (1) gehalten wird, dass der Haltestab (1) nach dem Aushärten des Betons wieder entfernt und das Befestigungselement (9) in dem Drahtkörper (3) eingeschraubt wird.

2. Verfahren nach Anspruch 1, **dadurch gekennzeichnet, dass** der Haltestab (1) im Wesentlichen zylindrisch ist.

3. Verfahren nach Anspruch 1 oder 2, **dadurch gekennzeichnet, dass** der Haltestab ein aufgeschäumter Kunststoffkörper ist.

4. Verfahren nach Anspruch 1 oder 2, **dadurch gekennzeichnet, dass** der Einsatzkörper (20) in den noch flüssigen Beton(6) eingesetzt wird.

5. Verfahren nach einem der Ansprüche 1, bis 4, **dadurch gekennzeichnet, dass** das Einbringen des Einsatzkörpers (20) in den Beton **dadurch** erfolgt, dass in den Beton (16) ein Loch (12) gebohrt wird, der Einsatzkörper (20) eingesetzt und der Zwischenraum (15) zwischen Loch(12) und Einsatzkörper(20) mit einer aushärtbaren Masse gefüllt wird.

6. Verfahren nach einem der Ansprüche 1 bis 5, **dadurch gekennzeichnet, dass** das Befestigungselement durch einen mit einem Außengewinde (8) versehenen Spannstab (9) gebildet wird.

7. Verfahren nach einem der Ansprüche 1. bis 6, **dadurch gekennzeichnet, dass** nach dem Einbringen des Einsatzkörpers (20) in den Beton der Haltestab (1) durch Ausbohren entfernt wird.

8. Verfahren nach einem der Ansprüche 1 bis 7, **dadurch gekennzeichnet, dass** der Drahtkörper (3) oder ein daran angeformter Montagebügel (30) an der Armierung (35) des Betons vor dem Vergießen des Betons befestigt wird.

9. Verfahren zur Herstellung eines aus Haltestab (1) und schraubenlinienförmigem Drahtkörper (3) gebildeten Einsatzkörpers (20), **dadurch gekennzeichnet, dass** das Aufschäumen des Haltestabs (1) durch Aufschäumen von expandierbarem Kunststoff, vorzugsweise Polystyrol, in einer Form erfolgt, in die der Drahtkörper (3) eingelegt ist.

10. Haltestab (1) zur Verwendung bei Durchführung des Verfahrens nach einem der Ansprüche 1 bis 9, **dadurch gekennzeichnet, dass** er aus aufgeschäumten Kunststoff besteht, im Wesentlichen zylindrisch, ausgebildet und mit einer schraubenlinienförmigen Nut (2) versehen ist.

11. Montagehilfe zur Durchführung des Verfahrens nach einem der Ansprüche 1 bis 9, **gekennzeichnet durch** einen rahmenartig ausgebildeten Montagebügel (30).

12. Montagehilfe nach Anspruch 11, **dadurch gekennzeichnet, dass** er mit dem schraubenlinienförmigen Drahtkörper verbunden, vorzugsweise mit diesem einteilig ausgebildet ist.

13. Montagehilfe nach Anspruch 11, **dadurch gekennzeichnet, dass** der Montagebügel (30) ein Standelement bildet, das auf einer Aufstandsfläche (50) aufstellbar ist.
